## Europäisches Patentamt

## European Patent Office

## Office européen des brevets

(19)

(11) Veröffentlichungsnummer: **0 031 131**
**B1**

(12)

# EUROPÄISCHE PATENTSCHRIFT

(45) Veröffentlichungstag der Patentschrift:
**09.11.83**

(21) Anmeldenummer: **80107953.4**

(22) Anmeldetag: **17.12.80**

(51) Int. Cl.³: **B 60 R 13/08**, B 60 K 11/08,
F 02 B 77/13

(54) **Nutzfahrzeug mit einer im wesentlichen innerhalb der Umrisse des Fahrerhauses angeordneten Kapsel zur Aufnahme eines Antriebsaggregates.**

(30) Priorität: **22.12.79 DE 2952188**

(43) Veröffentlichungstag der Anmeldung:
**01.07.81 Patentblatt 81/26**

(45) Bekanntmachung des Hinweises auf die Patenterteilung:
**09.11.83 Patentblatt 83/45**

(84) Benannte Vertragsstaaten:
**AT BE CH DE FR GB IT LI NL SE**

(56) Entgegenhaltungen:
**DE - A - 2 403 254**
**DE - A - 2 554 753**
**DE - A - 2 632 167**
**DE - A - 2 703 227**
**DE - A - 2 722 089**
**DE - A - 2 914 209**

(73) Patentinhaber: **Iveco Magirus Aktiengesellschaft,
Schillerstrasse 2, D-7900 Ulm/Donau (DE)**
Patentinhaber: **Forschungsinstitut für Kraftfahrwesen
und Fahrzeugmotoren an der Universität Stuttgart,
D-7000 Stuttgart 60 (DE)**

(72) Erfinder: **Fischer, Josef, Dipl.-Ing., Tulpenweg 14,
D-7901 Bernstadt (DE)**
Erfinder: **Scharfenort, Kurt, Auf der Schiessmauer 21,
D-7931 Oberdischingen (DE)**
Erfinder: **Stangl, Gerhard, Dipl.-Ing., Mozartstrasse 11,
D-7901 Dornstadt 1 (DE)**
Erfinder: **Liedl, Werner, Dr.-Ing., Goethestr. 43,
D-7261 Ostelsheim (DE)**
Erfinder: **Denker, Dietrich, Dr.-Ing., Helmstedter Str. 19a,
D-3300 Braunschweig (DE)**
Erfinder: **Gerngross, Hans-Günter, Dipl.-Ing.,
Radbrunnengasse 9, D-7143 Vaihingen/Enz (DE)**
Erfinder: **Brockmann, Horst, Kfz-Mechaniker,
Nürtingerstr. 112, D-7031 Böblingen (DE)**
Erfinder: **Teutsch, Siegfried, Schlosser, Dorfstr. 23,
D-7140 Ludwigsburg-Pflugfelden (DE)**

(74) Vertreter: **Socha, Peter, Magirus-Deutz AG
Postfach 2740 Schillerstrasse 2, D-7900 Ulm (DE)**

BUNDESDRUCKEREI BERLIN

### Nutzfahrzeug mit einer im wesentlichen innerhalb der Umrisse des Fahrerhauses angeordneten Kapsel zur Aufnahme eines Antriebsaggregates

Die Erfindung bezieht sich auf ein Nutzfahrzeug mit einer im wesentlichen innerhalb der Umrisse des Fahrerhauses angeordneten aus schallreduzierendem Material bestehenden Kapsel zur Aufnahme eines Antriebsaggregates, die bis auf eine an ihrer Frontseite angeordnete Lufteinlaßöffnung als geschlossenes Gehäuse ausgebildet ist, bei der beide Öffnungen durch je eine als Absorptionskanal ausgebildete Absorptionsstrecke abgedeckt ist und bei der innerhalb der Einlaßöffnung die Kühleinrichtung des Antriebsaggregates angeordnet ist.

Bei einem Nutzfahrzeug der vorstehend genannten Gattung (DE-A-2 914 209) ist es bekannt das Antriebsaggregat des Fahrzeuges in einer Kapsel anzuordnen, die bis auf eine Ein- und Auslaßöffnung als geschlossenes Gehäuse ausgebildet ist und bei der insbesondere im Bereich der vorderen Einlaßöffnung der Kapsel eine schallabsorbierende Durchführung zugeordnet ist.

Von Nachteil ist, daß bei diesem bekannten Kapselgehäuse insbesondere die vordere Durchführung der Einlaßöffnung sehr lang baut und daß durch diese gestreckte Bauweise für die Unterbringung des eigentlichen Kapselgehäuses zur Aufnahme des Antriebsaggregates innerhalb der Umrisse des Fahrerhauses nur noch ein begrenzter Bauraum zur Verfügung steht. Es ist daher nachteilig, daß sich diese Bauweise der Kapsel nur für den Einbau in sehr langbauende Fahrerhäuser eignet. Ein weiterer Nachteil besteht darin, daß die vordere Einlaßöffnung der geräuschreduzierenden Durchführung nach außen frei sichtbar ist, so daß aus der Kapsel noch eine gewisse Geräuschmenge nach außen dringen kann, wodurch bestmögliche Geräuschreduzierung durch die bekannte Kapselvorrichtung nicht erreichbar ist.

Aus der DE-A-2 703 227 ist ein Fahrzeug mit einem Kapselgehäuse zur Aufnahme des Antriebsaggregates bekannt, bei dem die Einlaß- und Auslaßöffnungen durch besondere Luftleit- oder Zwischenwände gegenüber dem Antriebsaggregat als Schallquelle abgeschirmt sind. Die der Einlaß- und Auslaßöffnung zugeordneten Luftleitwände bilden somit gegenüber der Schallquelle eine die Geräusche reduzierende Absorptionsstrecke.

Nachteilig ist hierbei, daß die Ausbildung der innerhalb der vorderen Eintriebsöffnung liegenden Luftleitwände eine tiefgreifende konstruktive Änderung an der Fahrzeugkarosserie erfordern, so daß für die Anwendung der bekannten Kapsel eine Neugestaltung der vorderen Karosserieteile notwendig ist, die mit einem erheblichen Aufwand an Werkzeugkosten verbunden ist, so daß die Herstellung der Kapsel insgesamt sehr teuer wird. Damit verbunden ist der weitere Nachteil, daß die bekannte Kapsel nicht in bereits vorhandene Karosserieformen integriert werden kann.

Schließlich ist es aus der DE-A-25 54 753 bekannt, zur Dämpfung der vom Lüfter eines Kühlers einer Brennkraftmaschine von insbesondere Erdbewegungsmaschinen erzeugten Geräusche an den Kühler auf dessen Lufteintrittsseite einen Luftleitschacht mit darin untergebrachten Relaxationskörpern anzubringen. Der Luftleitschacht wirkt dabei als Absorptionsstrecke, innerhalb der die Lüftergeräusche weitgehend vernichtet werden. Der Luftleitschacht ist dabei entweder geradlinig mit in einer Ebene parallel zueinander liegenden Luftein- und Luftauslaßöffnungen oder gebogen mit in zueinander senkrechten Ebenen liegenden Luftein- und Luftaustrittsöffnungen ausgeführt.

Abgesehen davon, daß bei dieser bekannten Ausführungsform die Brennkraftmaschine nicht in einer geräuschmindernden Kapsel untergebracht ist, hat sie den Nachteil, daß der Luftleitschacht gegenüber der Frontwand verhältnismäßig weit nach außen vorbaut, wodurch die Länge des Fahrzeuges und im übrigen die Ästhetik der Frontwand verschlechtert wird.

Ausgehend von dem bekannten Stand der Technik liegt der Erfindung die Aufgabe zugrunde, bei einem Nutzfahrzeug der eingangs genannten Art insbesondere die vordere Absorptionsstrecke so zu verbessern, daß sie die Länge des Fahrerhauses nicht beeinträchtigt, daß sie ohne erheblichen Konstruktionsaufwand in bereits bestehende Karosserieformen integriert werden kann und daß sie den Gesamteindruck der Frontwand des Fahrerhauses nicht beeinträchtigt.

Die Aufgabe ist erfindungsgemäß durch die im kennzeichnenden Teil des Anspruches 1 enthaltenen Merkmale gelöst.

Durch die Erfindung werden die Nachteile der bekannten Kapselgehäusevorrichtungen vermieden.

Gemäß einem weiteren Gedanken der Erfindung ist es vorteilhaft, daß die den Schallabsorberschacht nach außen begrenzende Wand zur Verbesserung der passiven Sicherheit aus elastischem Material besteht und über nachgiebige Streben an der Front- bzw. Innenwand des Fahrerhauses befestigt ist. Hierdurch erhält das Nutzfahrzeug eine »weiche Nase«, die insbesondere einen besseren Schutz für Fußgänger darstellt.

Gemäß einer anderen Ausgestaltung der Erfindung ist es zweckmäßig, wenn die als Teil der Frontwand, in deren Ebene verlaufende äußere Schachtwand als formsteifes Bauteil ausgebildet ist und sich über die Breite und Höhe der Frontwand erstreckt und die über mehrere ebenfalls über die Breite der Frontwand verteilt angeordnete und vertikal verlaufende nachgiebige Streben an der Frontwand bzw. einer formsteifen Innenwand befestigt ist. Durch diese Anbringung der Schachtwand besteht weiterhin die Möglichkeit, bei Frontlenkerfahrzeugen eine Knautschzone vorzusehen.

Damit hinter der äußeren Schachtwand liegende Fahrzeugteile auf einfache Weise erreicht werden können, ist es vorteilhaft, wenn die äußere Schachtwand in Höhe der Einlaßöffnung des Kühlluftkanals eine nach oben schwenkbare Klappe hat.

Zweckmäßig ist es weiterhin, wenn die Stoßstange in den Verlauf der Wand miteinbezogen wird, wobei der in Höhe der Stoßstange verlaufende Wandteil verstärkt und mittels besonderer Verbindungselemente an den Längsträgern des Fahrzeugrahmens befestigt ist.

Schließlich soll noch im Rahmen der Erfindung erreicht werden, daß die ästhetische Gestaltung der Fahrerhausfrontwand möglichst nicht beeinträchtigt wird. Aus diesem Grunde wird vorgeschlagen, daß die äußere Schachtwand der Form der Frontwand angepaßt ist.

In der Zeichnung sind verschiedene Ausführungsbeispiele der Erfindung dargestellt.

Es zeigt

Fig. 1 in einem schematischen Längsschnitt die erfindungsgemäße Motorkapsel im Fahrerhaus eines Nutzfahrzeuges.

Fig. 2 im Längsschnitt die Motorkapsel aus Fig. 1 mit einem im Bereich der Fahrerhausfrontwand parallel zu dieser verlaufenden Schallabsorberschacht.

Fig. 3 im Längsschnitt die Motorkapsel aus Fig. 1 mit einem Schallabsorberschacht, der gleichzeitig als Knautschzone und Teil der Frontwand dient.

Fig. 4 in einem Teilquerschnitt nach der Linie IV-IV aus Fig. 2 die Ausbildung des Schallabsorberschachtes.

Fig. 5 in einem Teilquerschnitt nach der Linie V-V aus Fig. 3 die Ausbildung des Schallabsorberschachtes als Knautschzone.

Ein nicht näher dargestelltes Nutzfahrzeug 1 hat ein Fahrerhaus 2 in Frontlenkerbauweise. In Fahrtrichtung wird das Fahrerhaus 2 vorne durch eine steil abfallende Frontwand 3 begrenzt. Innerhalb der Umrisse des Fahrerhauses 2 ist unter einem Fahrerhausboden 4 ein Antriebsaggregat 5 über nicht dargestellte elastische Lagerelemente an Längsträgern 28 eines Fahrgestellrahmens elastisch gelagert. Das Antriebsaggregat 5 besteht dabei aus einer Brennkraftmaschine 6 und einem Schaltgetriebe 7. Das gesamte Antriebsaggregat ist im Innenraum 8 einer Motorkapsel 9 untergebracht, deren Wände aus schallreduzierendem Material bestehen.

Die Kapsel 9 bildet ein in sich geschlossenes Gehäuse, das nur an seiner Vorderseite eine Lufteinlaßöffnung 10 und an seiner Rückseite hinter dem Schaltgetriebe 7 eine Luftauslaßöffnung 11 (strichpunktierte Linie) aufweist.

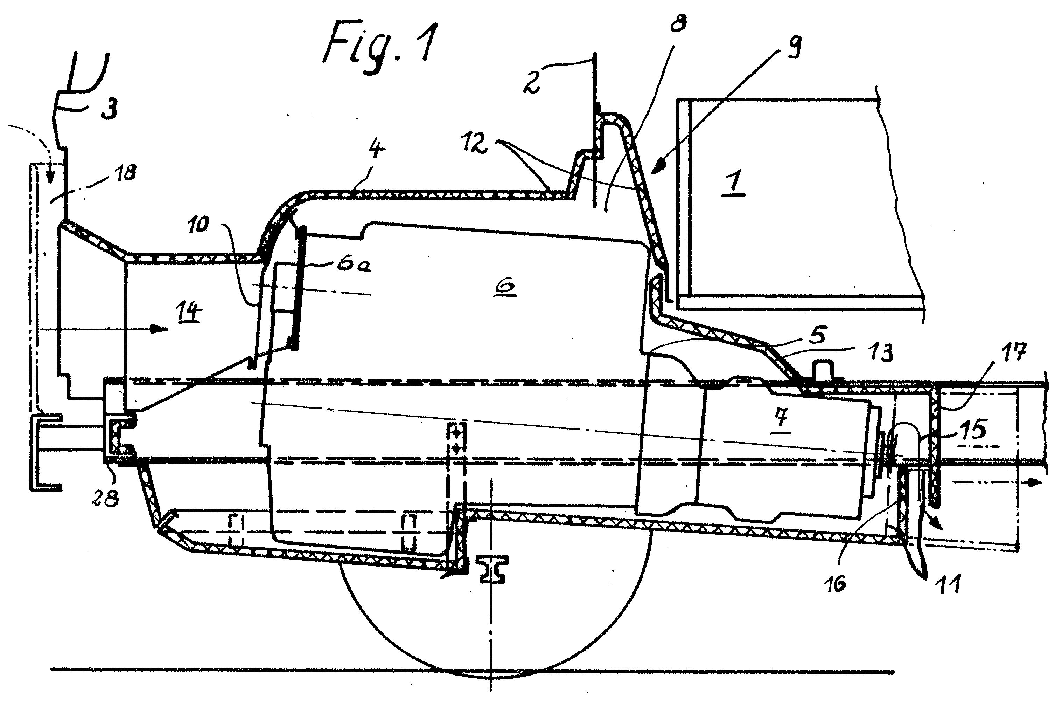

Gemäß Fig. 1 ist das Fahrerhaus 2 in Fahrtrichtung nach vorne kippbar ausgebildet. Aus diesem Grunde besteht die Kapsel aus einer fahrerhausfesten Kapselhaube 12 und einem beispielsweise an den Längsträgern 28 des Fahrgestellrahmens befestigten Kapselunterteil 13. Um zu verhindern, daß durch den zwischen Kapselhaube und Kapselunterteil bestehenden Spalt Geräusche aus dem Kapselinnenraum 8 nach außen gelangen können, ist dieser durch eine labyrinthartige Dichtung abgedeckt.

Da außerdem aus dem Kapselinnenraum 8 Geräusche durch die Einlaßöffnung 10 und die Auslaßöffnung 11 nach außen gelangen können, ist weiterhin im Rahmen der Erfindung vorgesehen, daß diese Öffnungen 10 und 11 durch je eine Absorptionsstrecke in Form von in Fahrzeuglängsrichtung sich erstreckenden Absorptionskanälen 14 bzw. 15 abgedeckt sind. Nach Fig. 1 ist dabei der Absorptionskanal 15 hinter dem Schaltgetriebe 7 strichpunktiert dargestellt.

Die in Fahrzeuglängsrichtung verlaufenden Absorptionskanäle 14 und 15 beanspruchen dabei einen gewissen Bauraum. Um diesen Bauraum möglichst klein zu halten, wird die rückwärtige Absorptionsstrecke von zwei in Fahrzeuglängsrichtung versetzt zueinander und senkrecht verlaufenden sowie sich teilweise überlappenden Querwänden 16 bzw. 17 gebildet, wobei der Abstand zwischen beiden Wänden 16 und 17 hierbei die nach unten gerichtete Auslaßöffnung 11 bildet.

Bei dem Antriebsmotor 6 handelt es sich um eine luftgekühlte Brennkraftmaschine mit einem Kühlluftgebläse 6a. Selbstverständlich kann als Antriebsmotor 6 auch eine wassergekühlte Brennkraftmaschine eingebaut werden, wobei der Wasserkühler dann innerhalb der Einlaßöffnung 10 angeordnet werden kann.

Weiterhin im Rahmen der Erfindung ist es möglich, daß die vordere vor der Kühleinrichtung des Antriebsmotors 6 liegende Absorptionsstrecke quer zur Fahrzeuglängsrichtung verläuft (wie durch strichpunktierte Linien dargestellt), um auch im vorderen Bereich des Fahrerhauses weiteren Bauraum einzusparen.

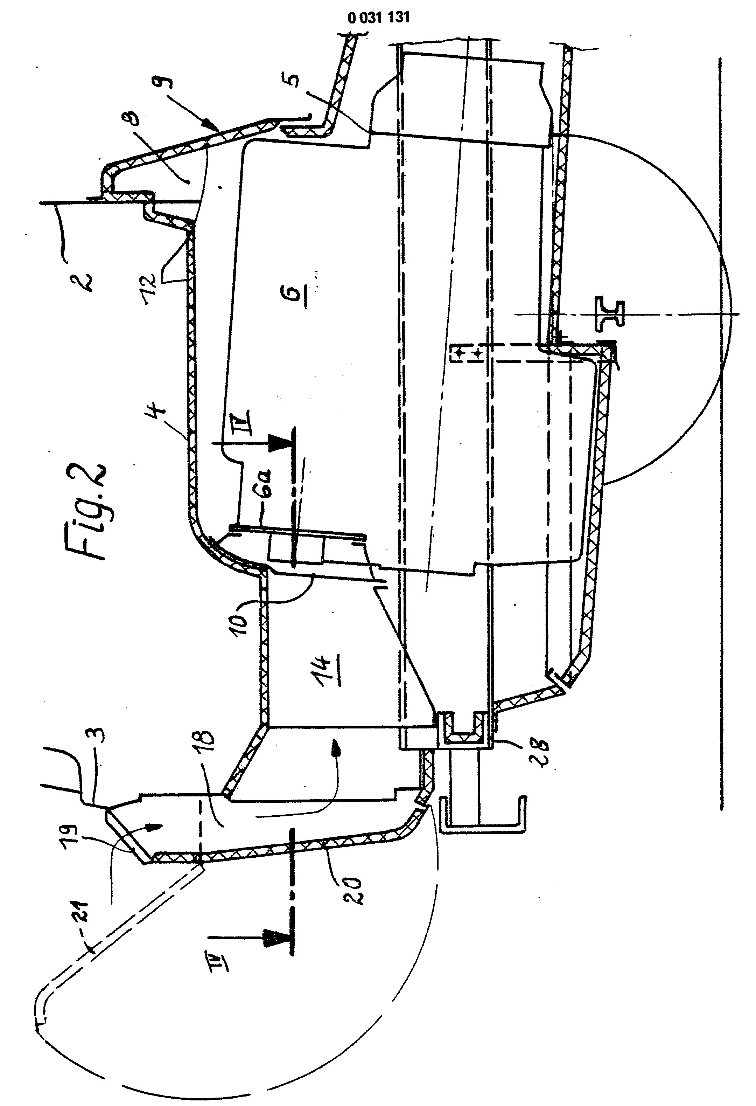

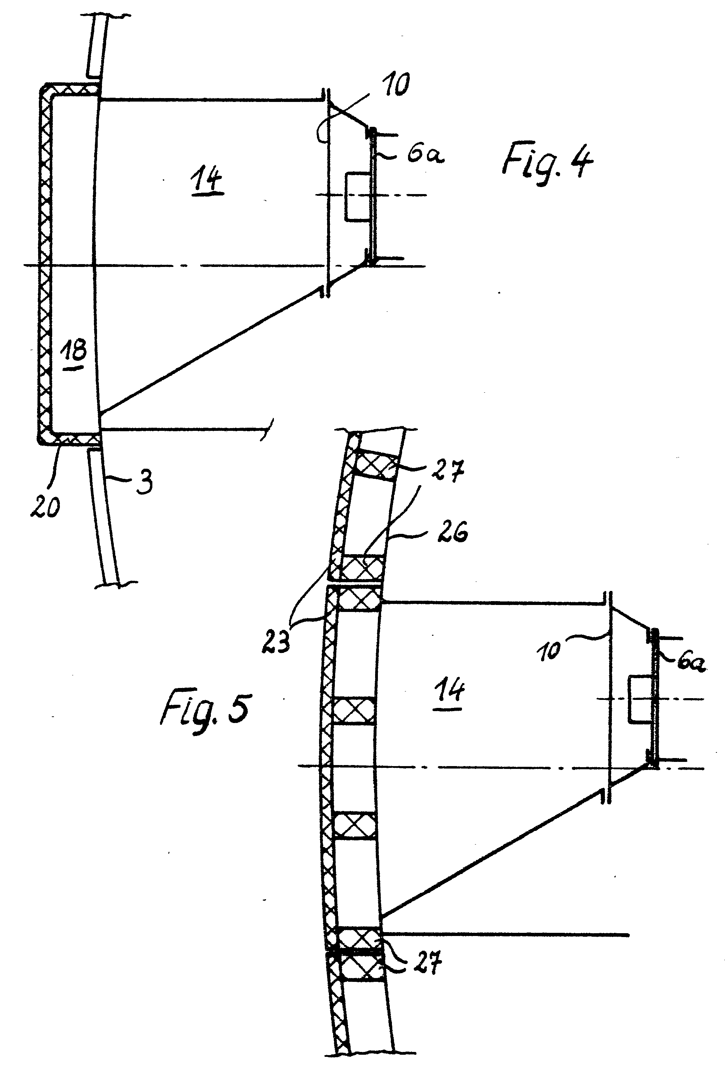

Gemäß Fig. 2 ist die vor dem Kühlgebläse 6a liegende Absorptionsstrecke durch einen etwa in der Ebene der Frontwand 3 im wesentlichen parallel zu dieser verlaufenden Schallabsorberschacht 18 verlängert, wobei die Lufteinlaßöffnungen 19 des Schachtes oberhalb der Einlaßöffnungen 10 der Kapsel unterhalb der Windschutzscheibe des Fahrerhauses liegen. Durch den Schallabsorberschacht 18 wird der Absorptionskanal 14 nach außen vollständig abgedeckt, wodurch eine weitere Reduzierung von Motorgeräuschen erreicht wird. Vorgesehen ist dabei, daß die den Schallabsorberschacht 18 nach außen abdeckende Wand 20 mit schallabsorbierendem Material belegt ist. Wie aus Fig. 4 zu erkennen ist, erstreckt sich der Absorberschacht 18 über den mittleren Bereich der Frontwand 3 und steht gegenüber dieser in Fahrtrichtung nach vorne vor. Damit durch diesen vorstehenden Teil des abgeknickten Schallabsorberschachtes 18 bei Unfällen mit Personen größere Verletzungen vermieden werden, besteht die Wand 20 aus einem elastischen Material, insbesondere Kunststoff. Eine Klappe 21 sichert die Zugänglichkeit zum Absorptionskanal 14 sowie unmittelbar hinter der Frontwand 3 liegenden Fahrzeugaggregaten.

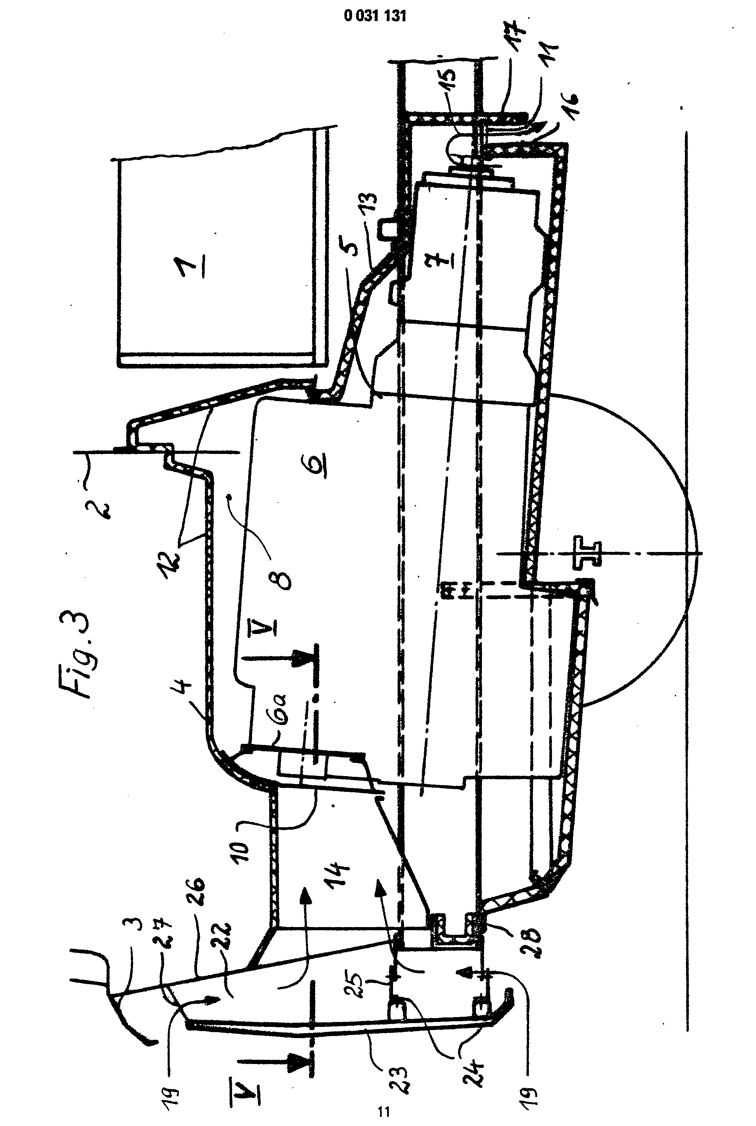

In Fig. 3 ist der Absorptionskanal 14 ebenfalls durch einen quer zu diesem verlaufenden Schallabsorberschacht 22 abgedeckt. Die den Schacht 22 nach außen begrenzende Wand 23 verläuft dabei innerhalb der Ebene der Frontwand 3 und ersetzt dabei einen Teil oder die ganze Frontwand.

Vorgesehen ist weiter, daß die vordere Stoßstange in den Verlauf der Wand 23 eingezogen ist, wobei in ihrer Höhe die Wand 23 durch Querholme 24 verstärkt ist, die mittels besonderer Verbindungselemente 25 an den Längsträgern 28 befestigt sind. Der übrige Teil der Wand 23 ist über im wesentlichen senkrecht und wie Fig. 5 zeigt, über die Breite der Frontwand verteilt angeordnete Streben an einer Fahrerhausinnenwand 26 befestigt, wobei die Streben 27 vorzugsweise aus nachgiebigem Material bestehen. Hierdurch ist der Absorberschacht 22 gleichzeitig Bestandteil einer Knautschzone im Bereich der Frontwand des Fahrerhauses.

Die Wirkung der Knautschzone kann dadurch noch verstärkt werden, wenn die äußere Wand 23 und die Innenwand 26 formsteif ausgebildet werden, so daß bei einer stoßartigen Belastung der Wand 23, wie z. B. bei einem Auffahrunfall, die einwirkenden Kräfte auf alle nachgiebig ausgebildeten Streben 27 verteilt werden, so daß bereits durch Formänderung ein Teil der Energie vernichtet wird, bevor die restliche Informationsenergie in die Fahrerhausinnenwand weitergeleitet wird.

Damit durch die Wand 23 die äußere Form des Fahrerhauses nicht beeinträchtigt wird, ist schließlich noch vorgesehen, daß diese Wand der Form der Frontwand des Fahrerhauses angepaßt ist. Der Absorptionskanal 14 bildet gleichzeitig den Lufteinlaßkanal für das Kühlgebläse 6a und der Absorptionskanal 15 den Luftausströmkanal aus der Kapsel 9.

**Patentansprüche**

1. Nutzfahrzeug mit einer im wesentlichen innerhalb der Umrisse des Fahrerhauses (2) angeordneten aus schallreduzierendem Material bestehenden Kapsel (9) zur Aufnahme eines Antriebsaggregates (5), die bis auf eine an ihrer Frontseite angeordnete Lufteinlaßöffnung (10) und eine an ihrer Rückseite angeordnete Lufteinlaßöffnung (11) als geschlossenes Gehäuse ausgebildet ist, bei der beide Öffnungen (10 und 11) durch je eine als Absorptionskanal (14 und 15) ausgebildete Absorptionsstrecke abgedeckt sind und bei der innerhalb der Einlaßöffnung (10) die Kühleinrichtung (6a) des Antriebsaggregates (5) angeordnet ist, dadurch gekennzeichnet, daß die vordere Einlaßöffnung (10) der Kapsel (9) durch einen etwa in der Ebene der Frontwand (3) im wesentlichen parallel zu dieser verlaufenden Schallabsorberschacht (18 bzw. 22) abgedeckt ist, der gegenüber der Einlaßöffnung (10) versetzt liegende Lufteinströmöffnungen (19) hat und für sich oder zusammen mit einem sich an den Schacht (18 bzw. 22) anschließenden und bis zur Einlaßöffnung erstreckenden Absorptionskanal (14) die vordere Absorptionsstrecke bildet, und daß die den Schallabsorberschacht (18) nach außen begrenzende Wand (20 bzw. 23) mit schallabsorbierendem Material belegt ist und über nachgiebige Streben (27) an der Frontwand (3) bzw. einer Innenwand (26) des Fahrerhauses (2) befestigt ist.

2. Nutzfahrzeug nach Anspruch 1, dadurch gekennzeichnet, daß die Wand (20 bzw. 23) aus elastischem Material besteht.

3. Nutzfahrzeug nach Anspruch 1 oder 2, dadurch gekennzeichnet, daß die Wand (23) als formsteifes Bauteil ausgebildet ist und sich über die Breite und Höhe der Frontwand (3) erstreckt und die über mehrere ebenfalls über die Breite der Frontwand (3) verteilt angeordnete und vertikal verlaufende nachgiebige Streben (27) an der Frontwand (3) bzw. einer formsteifen Innenwand (26) befestigt ist.

4. Nutzfahrzeug nach einem der Ansprüche 1 bis 3, dadurch gekennzeichnet, daß die Wand (20 bzw. 23) in der Ebene der Einlaßöffnung (10) eine nach oben schwenkbare Klappe (21) hat.

5. Nutzfahrzeug nach einem der Ansprüche 1 bis 4, dadurch gekennzeichnet, daß die Stoßstange in den Verlauf der Wand (23) einbezogen ist, wobei der in Höhe der Stoßstange verlaufende Wandteil verstärkt und mittels besonderer Verbindungselemente (25) an den Längsträgern (28) des Fahrzeugrahmens befestigt ist.

6. Nutzfahrzeug nach einem der Ansprüche 1 bis 5, dadurch gekennzeichnet, daß die Wand (20 bzw. 23) der Form der Frontwand (3) des Fahrerhauses (2) angepaßt ist.

**Claims**

1. A commercial vehicle with a capsule (9) of soundattenuating material arranged substantially within the contours of the driver's cab (2), the capsule serving to accommodate a driving unit (5) and being constructed as a closed housing except for an air inlet opening (10) arranged at its front side and an air exit opening (11) arranged at its rear side, both openings (10 and 11) opening onto a respective spatial absorption section constructed in the form of an absorption channel (14 and 15), and the cooling equipment (6a) for the driving unit (5) being arranged within the inlet opening (10), characterised in that the front inlet opening (10) of the capsule (9) communicates with a sound-absorbing duct (18 and 22 respectively) extending generaly in the plane of, and substantially parallel to, the front wall (3), which duct has air inlet openings (19) offset with respect to the inlet opening (10) and which, on its own or together with an absorption channel (14) adjoining the duct (18 and 22 respectively) and extending as far as the inlet opening, forms the front spatial absorption section, and in that the wall (20 and 23 respectively) defining the sound-absorbing duct (18) with respect to the outside is covered with sound-absorbing material and is secured to the front wall (3) or to an interior wall (26) of the driver's cab via yielding struts (27).

2. A commercial vehicle according to claim 1, characterised in that the wall (20 or 23) is made of elastic material.

3. A commercial vehicle according to claim 1 or claim 2, characterised in that the wall (23) is constructed as a nonyielding component and extend over the width and height of the front wall (3), the wall (23) being secured to the front wall (3) or to a non-yielding internal wall (26) via a plurality of vertically-extending yielding struts (27) distributed over the width of the front wall (3).

4. A commercial vehicle according to any one of the claims 1 to 3, characterised in that the wall (20 or 23) has an upwardly pivotable flap (21) in the plane of the inlet opening (10).

5. A commercial vehicle according to any one of the claims 1 to 4, characterised in that the bumper is incorporated in the course of the wall (23), the part of the wall lying at the height of the bumper being reinforced and being fastened to the longutudinal bearing supports (28) of the vehicle chassis by means of special connecting elements (25).

6. A commercial vehicle according to any one of the claims 1 to 5, characterised in that the wall (20 or 23) is adapted to the shape of the front wall (3) of the driver's cab (2).

## Revendications

1. Véhicule utilitaire comprenant un blindage (9) situé essentiellement dans les limites des contours de la cabine (2) du conducteur, blindage établi en un matériau abaissant le niveau sonore, blindage destiné à accueillir un groupe de propulsion (5) et formant une enveloppe fermée, sauf une ouverture d'entrée d'air (10) située sur son côté antérieur et une ouverture de sortie d'air (11), située sur son côté postérieur, où les deux ouvertures (10 et 11) sont masquées chacune par un tronçon d'absorption conformé en canal d'absorption (14, 15) et où le dispositif de refroidissement (6a) du groupe de propulsion (5) est disposé à l'intérieur de l'ouverture d'entrée (10), caractérisé en ce que l'ouverture d'entrée antérieure (10) du blindage (9) est masquée par un puits d'absorption phonique (18 ou 22) situé à peu près dans le plan de l'auvent (3) et essentiellement parallèle à celui-ci, puits qui présente des ouvertures d'afflux d'air (19) décalées par rapport à l'ouverture d'entrée d'air (10) et qui constitue — à lui seul ou conjointement avec un canal d'absorption (14) se raccordant au puits (18 ou 22) et s'étendant jusqu'à l'ouverture d'entrée — le trajet d'absorption antérieur, et en ce que le paroi (20 ou 23) limitant le puits d'absorption phonique vis-à-vis de l'extérieur est garnie d'un matériau d'absorption phonique et est fixée à l'auvent (3) ou à une paroi intérieure (26) de la cabine (2) du conducteur au moyen d'entretoises souples (27).

2. Véhicule utilitaire suivant la revendication 1, caractérisé en ce que la paroi (20 ou 23) est constituée en un matériau élastique.

3. Véhicule utilitaire suivant la revendication 1 ou 2, caractérisé en ce que la paroi (23) est constituée en élément de construction indéformable et s'étend sur toute la largeur et toute la hauteur de l'auvent (3) et est fixée à l'auvent (3) ou à une paroi intérieure indéformable (26) au moyen de plusieurs entretoises souples (27), également réparties sur toute la largeur de la paroi frontale (3) et orientées verticalement.

4. Véhicule utilitaire suivant une quelconque des revendications 1 à 3, caractérisé en ce que la paroi (20 ou 23) présente, dans le plan de l'ouverture d'entrée (10), un volet (21) relevable par basculement.

5. Véhicule utilitaire suivant une quelconque des revendications 1 à 4, caractérisé en ce que le pare-chocs se confond avec la paroi (23), la partie de cette paroi sitée au niveau du pare-chocs étant renforcée et étant fixée aux longerons (28) du châssis du véhicule à l'aide d'éléments d'assemblage particuliers (25).

6. Véhicule utilitaire suivant une quelconque des revendications 1 à 5, caractérisé en ce que la forme de la paroi (20 ou 23) est adaptée à celle de l'auvent (3) de la cabine (2) du conducteur.

0 031 131

# Fig. 1

Fig.2

Fig.3

0 031 131

Fig. 4

Fig. 5